Europäisches Patentamt

European Patent Office

Office européen des brevets

(11) Veröffentlichungsnummer: **0 007 989**
A1

(12) **EUROPÄISCHE PATENTANMELDUNG**

(21) Anmeldenummer: **79102032.4**

(22) Anmeldetag: **20.06.79**

(51) Int. Cl.³: **B 29 F 1/10,** B 60 B 5/02

(30) Priorität: **19.07.78 DE 2831644**

(43) Veröffentlichungstag der Anmeldung: **20.02.80**
**Patentblatt 80/4**

(84) Benannte Vertragsstaaten: **AT BE CH FR GB IT LU NL SE**

(71) Anmelder: **Haussels, Berthold, Am Krupin 15, D-5632 Wermelskirchen-Tente (DE)**

(72) Erfinder: **Haussels, Berthold, Am Krupin 15, D-5632 Wermelskirchen-Tente (DE)**

(74) Vertreter: **Sturies, Herbert, Dr. Ing. Dipl.-Phys. et al, Brahmsstrasse 29, D-5600 Wuppertal (DE)**

(54) Verfahren zum Herstellen gummielastisch bereifter Kunststoff-Laufräder und danach erzeugtes Laufrad.

(57) Gummielastisch bereifte Kunststoff-Laufräder besitzen zumeist einen längsmittig unterteilten Radscheibenkörper (2), dessen beide Radscheiben aus Spritzkunststoff bestehen und mit so angeformten und sich gegenseitig ergänzenden Naben- (5) und Felgenteilen (7) versehen sind, daß sie nach Zwischenlegen des Gummiringes (1) in das Felgenbett axial zusammengedrückt und schnappverbindungsartig zusammengehalten werden.

Um solche Kunststoff-Laufräder ohne Montageschwierigkeiten noch einfacher, gleichsam in einem Guß herstellen zu können, wird in eine dem Fertigprofil des Laufrades entsprechend gestaltete Spritzgußform zunächst der gummielastische Reifen eingelegt und sodann darin die Radscheibenkörper-Kunststoffmasse mit so hohem Druck eingespritzt, daß dabei der Gummireifen an seinem Innenumfang stärker geweitet wird als es der anschließenden Schrumpfung des Spritzkunststoffes entspricht. Für stärkeren Beanspruchungen unterworfenen Laufräder können vor dem Einspritzen der dem Radscheibenkörper (2) bildenden Kunststoffmasse (10) in die Spritzgußform auch noch entsprechend gestaltete Füllkörper (11) oder -kerne eingelegt werden, um dadurch die Spritzkunststoff-Wandstärke und -Erstarrungsdauer zu verringern. So kommt man auf zeit- und arbeitssparende Weise zu einem soliden, lunkerfreien Kunststoff-Laufrad.

Berthold Haussels, 5632 Wermelskirchen-Tente, Am Krupin 15

==================================================================

"Verfahren zum Herstellen gummielastisch bereifter Kunststoff-Laufräder und danach erzeugtes Laufrad"

==================================================================

Die Erfindung bezieht sich auf ein Verfahren zum Herstellen gummielastisch bereifter Kunststoff-Laufräder, deren mit einem den elastischen Gummireifen innen umgreifenden Felgenbett versehener Radscheibenkörper in einer Kunststoff-Spritzgußform erzeugt wird. Weiterhin betrifft die Erfindung ein so hergestelltes Laufrad.

Bekannte gummielastisch bereifte Kunststoff-Laufräder (z.B. nach der DE-PS 19 21 736), die insbesondere für Lenkrollen an verfahrbaren Geräten verwendet werden, besitzen zumeist einen längsmittig unterteilten Radscheibenkörper, der aus zwei mit entsprechend angeformten, sich gegenseitig ergänzenden Naben- und Felgenteilen versehenen Radscheiben aus Spritzkunststoff besteht, die nach dem Einlegen des elastischen Gummireifens in das Felgenbett der einen Radscheibe axial zusammengedrückt und dadurch unter Einpressung des Gummireifens zwischen den beiden Felgenhälften schnappverbindungsartig zusammengehalten werden. Solche Laufräder haben sich zwar in der Praxis durchaus bewährt. Jedoch bedingt ihre mehrteilige Zusammensetzung noch einen erheblichen Herstellungs- und Montageaufwand, zumal dabei auf einen guten Paßsitz der Schnappverbindungsglieder geachtet werden muß. Ähnliche Schwierigkeiten bestehen auch bei anderen bekannten gummibereiften Kunststoff-Laufrädern (z.B. nach der DE-AS 20 64 359), die einen Einscheiben-Radkörper mit angeformter Nabe und Felgenbett-Hälfte besitzen und zur Befestigung des Gummireifens einen zusätzlichen Felgenbettring erfordern, der das den Gummireifen innenseitig entsprechend umgreifende Felgenbett ergänzt.

Der Erfindung liegt demgegenüber die Aufgabe zugrunde, ein gummielastisch bereiftes Kunststoff-Laufrad zu schaffen, das bei einfacher und solider Beschaffenheit wesentlich leichter herzustellen ist und keinerlei Montageschwierigkeiten bereitet. Diese Aufgabe wird erfindungsgemäß dadurch gelöst, daß zur Herstellung des Laufrades eine seinem Fertigprofil entsprechend konturierte Spritzgußform verwendet, in diese zunächst der elastische Gummireifen eingelegt und daraufhin der Radscheibenkörper mit seinem am Gummireifen unmittelbar angreifenden Felgenbett unter so hohem Druck gespritzt wird, daß der Gummireifen dabei an seinem Innenumfang stärker elastisch geweitet wird als es der anschließenden Schrumpfung des Spritzkunststoffes entspricht. Auf diese Weise kommt man zu einem gummibereiften Kunststoff-Laufrad, das nach seiner Entformung in praktisch gebrauchsfähigem Zustand vorliegt und dafür keine nennenswerte Nachbearbeitung erfordert, bei dem also insbesondere das nachträgliche Aufsetzen und Montieren des Gummireifens entfällt. Dabei ist zugleich wesentlich, daß der Gummireifen mit hinreichender Vorspannung am angespritzten Radscheibenkörper bzw. an dessen Felgenbett anliegt. Überraschenderweise hat sich beim Anspritzen des Radscheibenkörpers an den in die Spritzgußform eingelegten Gummireifen gezeigt, daß trotz dessen elastischer Nachgiebigkeit bzw. Verformbarkeit keine unerwünschten Kunststoff-Ausblähungen bzw. -Ansätze zwischen der Formwandung und dem daran anliegenden Gummireifen ergeben, da letzterer beim Einspritzen des Kunststoffes im wesentlichen radial und nicht etwa auch an seinen Flanken axial zusammengedrückt wird. Der Spritzdruck des Kunststoffs wird in Anpassung an die elastische Verformbarkeit des Gummireifens so hoch gewählt, daß dieser dabei durch die Kunststoffspritzmasse so stark zusammengedrückt wird, daß er während der anschließenden Erstarrung der Spritzgußmasse deren Schrumpfung durch entsprechende Wiederausdehnung nicht nur zu folgen vermag, sondern noch vorgespannt bleibt, mithin fest am Felgenbett anliegt. Dazu wird zweckmäßig mit Spritzdrücken von 150 bis 180 to gearbeitet, die aber in Einzelfällen auch höher oder darunter liegen können.

Um die Haftung zwischen dem Gummireifen und dem zu spritzenden Radscheibenkörper-Felgenbett noch zu verbessern, kann nach einem weiteren Merkmal der Erfindung auf den elastischen Gummireifen vor oder bei seinem Einlegen in die Spritzgußform innenseitig noch ein entsprechendes Klebemittel aufgetragen werden. Wie sich aber gezeigt hat, tritt bei den hohen Temperaturen der Spritzgußmasse ohnehin bereits eine sinterartige Verschweißung zwischen dem Spritzkunststoff und dem anliegenden Gummireifen auf, so daß sich im Regelfall ein besonderer Klebemittelauftrag erübrigt.

Weiterhin können zur Verringerung der Spritzkunststoff-Wandstärke und -erstarrungsdauer auch zusätzliche Füllkörper, -kerne o.dgl. in die Spritzgußform eingelegt werden. Das empfiehlt sich insbesondere für stärkeren Belastungen unterworfene Laufräder, die entsprechend starkwandig ausgebildete Radscheibenkörper erfordern. So hergestellte Radscheibenkörper bieten entsprechende Vorteile grundsätzlich auch bereits dann, wenn die Bereifung erst nachträglich auf ihnen montiert würde, also beispielsweise durch Aufstreifen des Gummireifens.

Die Erfindung bezieht sich auch auf ein nach dem vorerwähnten Verfahren hergestelltes Kunststoff-Laufrad mit Gummibereifung, das sich erfindungsgemäß dadurch auszeichnet, daß der elastische Gummireifen mit Vorspannung auf dem an ihm innenseitig angespritzten Kunststoff-Radscheibenkörper bzw. dessen Felgenbett anliegt. Vorzugsweise besitzt dabei der angespritzte Radscheibenkörper ein Doppel-T-förmiges Profil, indem er aus einem hülsenförmigen Nabenteil und einem damit über einen radial verlaufenden Stegteil verbundenen Felgenteil besteht, das zwei den Gummireifen seitlich außen umgreifende, das Felgenbett zwischen sich einschließende Felgenhörner besitzt. Für leichtere Radlasten kann dabei der Radscheibenkörper von homogener Spritzkunststoff-Beschaffenheit sein, wobei für größere Beanspruchungen an den Außenseiten des radial verlaufenden Stegteiles auch noch radial verlaufende Verstärkungsrippen vorhanden bzw. angeformt sein können.

Statt solcher äußeren Verstärkungsrippen, die eine unglatte Außenfläche des Radscheibenkörpers bedingen und zu vermehrtem Schmutzansatz führen, ist es nach einem weiteren Merkmal der Erfindung aber vorteilhafter, in dem an dem Gummireifen innenseitig angespritzten Radscheibenkörper einen ringförmigen Füllkörper einzubetten, der gegebenenfalls auch mehrteilig beschaffen sein kann. Zweckmäßig ist ein solcher ringförmiger Füllkörper in Höhe des radialen Stegteiles vorgesehen, der sich aber teilweise auch bis in den Naben- und/oder Felgenteil erstrecken kann. Auf diese Weise lassen sich für den Radscheibenkörper beliebig starke Wandbreiten erzielen, ohne daß sich das nachteilig für den Erstarrungsvorgang des an den Gummireifen innenseitig angespritzten Kunststoffes auswirkt. Es ist aber auch möglich, den Radscheibenkörper so auszubilden, daß er aus zwei vorgefertigten schalenförmigen Seitenwandteilen und einem an diese sowie an den Gummireifen angespritzten Zwischenteil besteht, wenngleich bei der Herstellung eines solchen Laufrades wegen der Behinderung des Wärmeabflusses durch die in die Form eingelegten schalenförmigen Seitenwandteile mit längeren Formstandzeiten gearbeitet werden muß.

Schließlich ist es nach der Erfindung auch möglich, daß der elastische Gummireifen an seinem Innenumfang mit nach innen ragenden, segmentartigen Füllvorsprüngen versehen ist und der daran und dazwischen eingespritzte Radscheibenkörper ein U-förmiges Profil besitzt, dessen Steg die Radnabe und dessen Schenkel zwei die Füllvorsprünge des Gummireifens seitlich umschließende Radscheiben-Seitenwände bilden, die durch zwischen die Füllvorsprünge greifende Verstärkungsstege zusätzlich miteinander verbunden sind. Auch in diesem Falle wird zur Herstellung des Laufrades zunächst der elastische Gummireifen mit seinen inneren Füllvorsprüngen in die Spritzgußform eingelegt und sodann der U-förmig profilierte Radscheibenkörper angespritzt, so daß das Laufrad nach seiner Entformung bereits gebrauchsfertig ist. Da auch hier der Radscheibenkörper verhältnismäßig dickwandig ist, vermag auch dieses Laufrad größere Radlasten abzutragen.

In der Zeichnung sind mehrere Ausführungsbeispiele erfindungsgemäß hergestellter und beschaffener Laufräder dargestellt, wobei die

Fig. 1 bis 6 jeweils Querschnitte durch die verschiedenen Laufräder zeigen und

Fig. 7 einen Schnitt nach der Linie VII-VII der Fig. 6 wiedergibt.

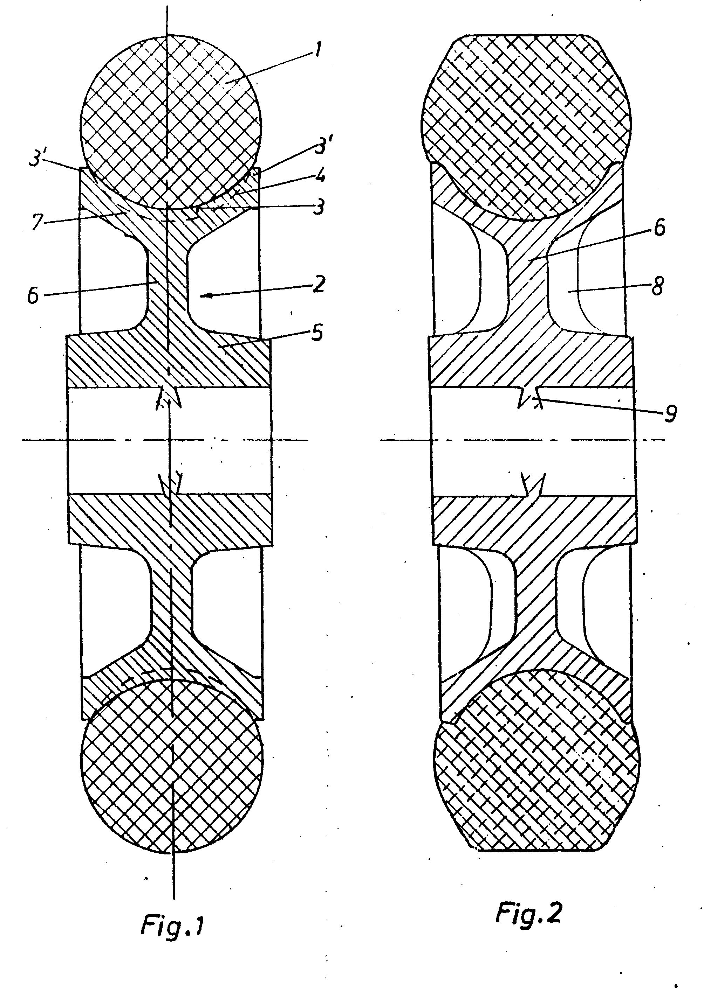

Alle dargestellten Laufräder, die insbesondere für Lenkrollen an verfahrbaren Geräten, Behältern o.dgl. bestimmt sind, stimmen insoweit überein, als sie einen elastischen Gummi- bzw. Kautschuk-Reifen 1 und einen daran innenseitig angespritzten Radscheibenkörper 2 aus Kunststoff besitzen und so hergestellt werden, daß zunächst der Gummireifen 1 in eine dem Fertigprofil des Laufrades entsprechend konturierte Spritzgußform eingelegt und sodann der Radscheibenkörper 2 unter so hohem Druck eingespritzt wird, daß der Gummireifen dabei an seinem Innenumfang soweit zusammengedrückt wird, daß er nach dem Entformen des Laufrades noch mit hinreichendem Vorspanndruck, auch unter Berücksichtigung des während des Abkühlungs- bzw. Erstarrungsvorganges auftretenden Schwundes der Spritzgußmasse, im Felgenbett 3 des Radscheibenkörpers liegt. Die in Fig. 1 gestrichelt dargestellte Kurve 4 gibt den ursprünglichen, also noch unverformten Querschnitt des Gummireifens 1 wieder. Die Spritzdrücke können 150 bis 180 to betragen, während die Spritztemperaturen mehr oder weniger um 250°C schwanken.

Der an den Gummireifen 1 innenseitig angespritzte Radscheibenkörper 2 besitzt vorteilhaft ein Doppel-T-förmiges Profil. Er besteht aus einem hülsenförmigen Nabenteil 5 und einem damit über einen radial verlaufenden Stegteil 6 verbundenen Felgenteil 7, das zwei den Gummireifen 1 seitlich außen umgreifende, das Felgenbett 3 zwischen sich einschließende Felgenhörner 3' besitzt.

Im Falle der Fig. 1 ist der Radscheibenkörper von homogener Kunststoff-Beschaffenheit. Er kann für geringere Ansprüche z.B. aus Polypropylen oder Polyäthylen bestehen, während man für höhere Qualitäten beispielsweise auch Polyamid verwenden kann. Da der Radscheibenkörper 2 hier aber einen verhältnismäßig dünnwandigen Stegteil 6 besitzt, ist er nur begrenzt tragfähig, so daß man für größere Beanspruchungen entsprechend Fig. 2 an den Außenseiten des radial verlaufenden Stegteiles 6 radial verlaufende Versteifungsrippen 8 vorsehen kann, die bei entsprechender Gestaltung der Spritzgußform ohne weiteres mit angespritzt werden können. Das Anspritzen des Radscheibenkörpers 2 erfolgt vorzugsweise von der Radnabenmitte aus, wie das die angedeuteten Spritzangüsse 9 zeigen.

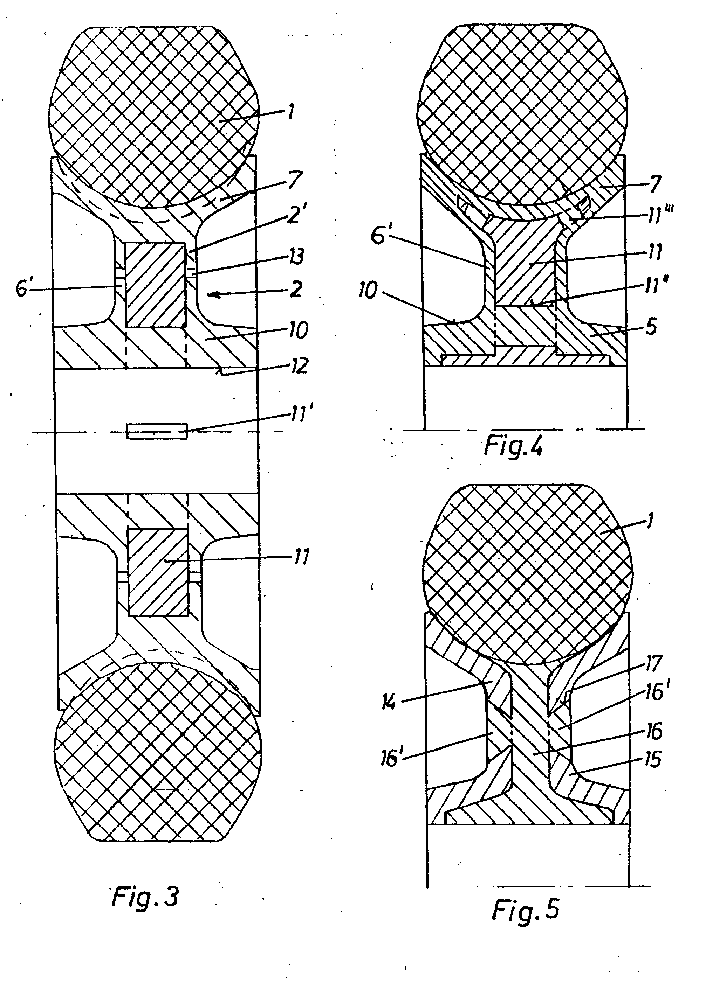

Das in Fig. 3 dargestellte gummibereifte Kunststoff-Laufrad ist für größere Beanspruchungen bestimmt und gegenüber dem in Fig. 2 dargestellten Laufrad vor allem auch insofern vorteilhafter, als es glatt verlaufende Radscheiben-Außenseiten besitzt. Um den hier verhältnismäßig starkwandigen Radscheibenkörper 2 mit hinreichend kurzer Formzeit und lunkerfrei an den in die Form eingelegten Gummireifen 1 anspritzen zu können, ist in die Spritzgußmasse 10 ein ringförmig ausgebildeter Füllkörper 11 eingebettet, der beispielsweise aus einem vorgefertigten Kunststoffteil, aber auch aus Metall, Holz o.dgl. bestehen kann. Auch kann statt eines einteiligen Füllringes ein mehrteilig beschaffener, beispielsweise aus einem Scheibenpaket bestehender Füllring verwendet werden. Um diesen Füllring 11 in die Spritzgußform einlegen und ihn darin an geeigneter Stelle halten zu können, ist er innenseitig mit radial verlaufenden Stegen 11' versehen, die sich auf den die Nabenachshöhlung aussparenden Formvorsprüngen abstützen. Weiterhin können zum gleichen Zweck in den Seitenwänden 2' des anzuspritzenden Radscheibenkörpers 2 Stützlöcher 13 vorhanden sein, die von entsprechend gelegenen, an den beiden Formenhälften vorhandenen Stützstiften zur axialen Zentrierung des Füllringes 11 zurückgeblieben sind und die nach dem Entformen gegebenenfalls wieder durch ein geeignetes Füllmittel geschlossen werden können.

Im Falle der Fig. 4 erstreckt sich der im wesentlichen Doppel-T-förmig profilierte Füllring 11 sowohl in den Nabenteil 5 als auch in den Felgenteil 7 des Radscheibenkörpers. Der Füllring 11 ist mit mehreren Durchbrüchen 11'', 11''' versehen, um während des Spritzens der Kunststoffmasse 10 deren Durchfluß an diesen Stellen zu ermöglichen.

Eine weitere Möglichkeit zur Erzielung verhältnismäßig starkwandiger Radscheibenkörper zeigt die Fig. 5, in der letzterer aus zwei vorgefertigten schalenförmigen Seitenwandteilen 14,15 und einem an diese sowie an den Gummireifen 1 angespritzten Zwischenteil 16 besteht, der zweckmäßig noch mit mehreren in entsprechende Löcher 17 der Seitenwandteile 14,15 eingreifenden Vorsprüngen 16' versehen ist, die zugleich den Zusammenhalt der Seitenwandteile mit dem angespritzten Zwischenteil 16 gewährleisten.

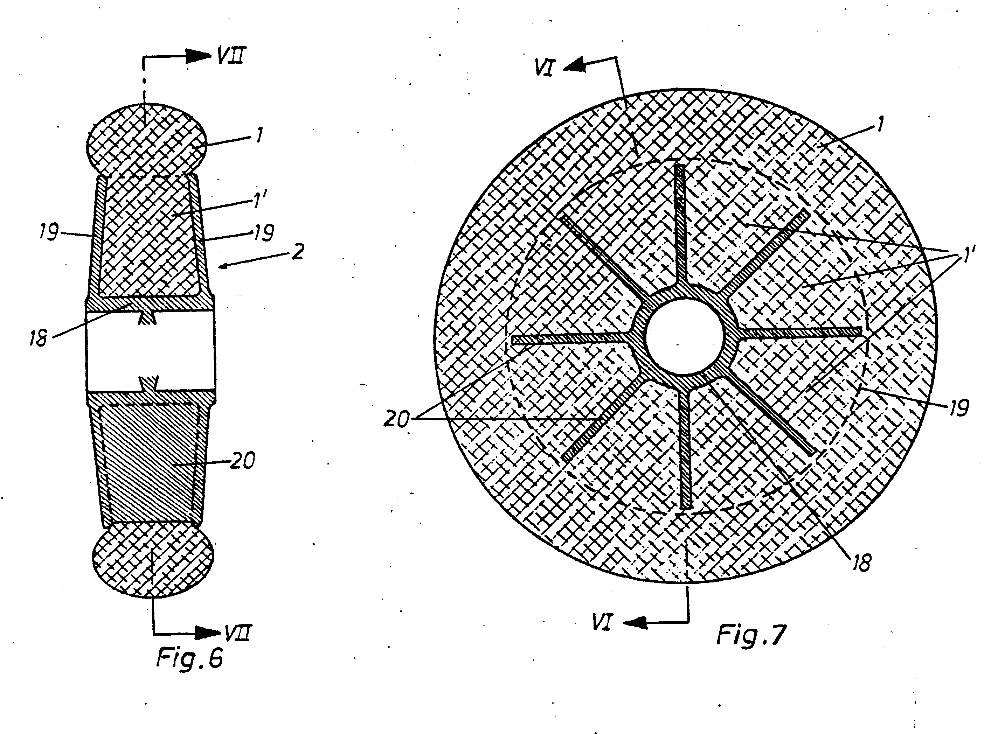

Bei dem in den Fig. 6 und 7 dargestellten Ausführungsbeispiel ist der elastische Gummireifen 1 an seinem Innenumfang mit nach innen ragenden segmentartigen Füllvorsprüngen 1' versehen, während der daran und dazwischen an- bzw. eingespritzte Radscheibenkörper 2 ein U-förmiges Profil besitzt, dessen Steg die Radnabe 18 und dessen Schenkel 2 die Füllvorsprünge 1' des Gummireifens seitlich umschließende Radscheiben-Seitenwände 19 bilden. Diese sind noch durch zwischen die Füllvorsprünge 1' greifende Verstärkungsstege 20 zusätzlich miteinander verbunden. Auch in diesem Fall wird der zuvor in die Kunststoff-Spritzgußform eingelegte Gummireifen 1 beim Einspritzen der den U-förmig profilierten Radscheibenkörper 2 bildenden Kunststoffmasse an seinem Innenumfang und an seinen nach innen weisenden Füllvorsprüngen 1' vorübergehend so stark zusammengedrückt, daß er nach dem Entformen des Laufrades überall mit Vorspannung an dem Radscheibenkörper 2 bzw. an dessen Seitenwandteilen 19 und seinen Verstärkungsstegen 20 anliegt, wodurch es hier zu einer besonders innigen Verbindung zwischen Gummi und Spritzkunststoff kommt.

Im Rahmen der vorliegenden Erfindung sind gestaltsmäßige Abwandlungen des elastischen Gummireifens wie auch des Radscheibenkörpers ohne weiteres möglich, z.B. auch in der Weise, daß letzterer kein konkav ausgehöhltes, sondern ein flacheres, ja sogar zylindrisches Felgenbett 3 besitzt, da auch in diesem Falle wegen der erfindungsgemäßen Laufrad-Herstellung und der dadurch bedingten Vorspannung des Gummireifens 1 dessen axial unverrückbarer Sitz auf dem Radscheibenkörper gewährleistet ist. Weiterhin versteht es sich, daß bei allen dargestellten Laufrädern deren Naben 5 nicht unmittelbar auf entsprechenden Radachsen aufsitzen bzw. darauf zu laufen brauchen, sondern daß in die Naben auch entsprechende Wälzlager eingebaut werden können, wie das bei solchen Laufrädern zumeist erwünscht ist.

Schließlich kann die erfindungsgemäße Herstellung des Radscheibenkörpers aus um einen oder mehrere zuvor in die Spritzgußform eingelegte Füllkörper gespritztem Kunststoff auch bereits dann mit Vorteil verwendet werden, wenn die Bereifung erst nachträglich auf dem so erzeugten Radscheibenkörper aufgebracht wird. Daher umfaßt die Erfindung auch noch ein solches Laufrad, das einen einteiligen, aus einem Füllkörper 11 und daran angespritzter Kunststoffmasse 10 bestehenden Radscheibenkörper 2 mit darauf aufgebrachter Bereifung besitzt. Vorteilhaft besitzt der aus Spritzkunststoff bestehende Radscheibenkörper 2 entsprechend Fig. 3 oder 4 ein Doppel-T-förmiges Profil, nämlich ein jeweils hülsenförmiges Nabenteil 5 und Felgenteil 7 sowie dazwischen ein Stegteil 6', das den eingelegten Füllkörper 11 beidseitig umgreifende Radscheiben-Seitenwände bildet. Bei einem so beschaffenen, einfach herstellbaren Doppelwand-Laufrad kann die Wandstärke je nach Laufradbeanspruchung beliebig groß gewählt werden, ohne daß dadurch der glatte Außenverlauf des Radscheibenkörpers aufgegeben zu werden braucht. Auch ist es in diesem Falle, sofern das Felgenbett nicht allzu tief ausgekehlt ist, sondern flacher oder gar zylindrisch verläuft, ohne weiteres möglich, den Reifen 1 nachträglich mit hinreichender Vorspannung aufzustreifen und dabei zu dessen besserer Axialsicherung gegebenenfalls noch ein Klebe- bzw. Haftmittel zwischen Reifen und Felgenumfang vorzusehen.

0007989

## Patentansprüche

1. Verfahren zum Herstellen gummielastisch bereifter Kunststoff-Laufräder, deren mit einem den elastischen Gummireifen (1) innen umgreifenden Felgenbett (3) versehener Radscheibenkörper (2) in einer Kunststoff-Spritzgußform erzeugt wird, d a d u r c h g e k e n n z e i c h n e t, daß eine dem Fertigprofil des Laufrades entsprechend konturierte Spritzgußform verwendet, in diese zunächst der elastische Gummireifen (1) eingelegt und daraufhin der Radscheibenkörper (2) mit seinem am Gummireifen unmittelbar angreifenden Felgenbett (3) unter so hohem Druck gespritzt wird, daß der Gummireifen (1) dabei an seinem Innenumfang (4) stärker elastisch geweitet wird als es der anschließenden Schrumpfung des Spritzkunststoffes entspricht.

2. Verfahren nach Anspruch 1, d a d u r c h g e k e n n - z e i c h.n e t, daß auf den elastischen Gummireifen (1) vor oder bei seinem Einlegen in die Spritzgußform innenseitig ein die Haftung zwischen ihm und dem zu spritzenden Radscheibenkörper-Felgenbett (3) verbesserndes Klebemittel aufgetragen wird.

- 12 -

0007989

3. Verfahren zur Herstellung des Radscheibenkörpers eines Kunststoff-Laufrades in einer Kunststoff-Spritzgußform, insbesondere nach Anspruch 1 oder 2, d a d u r c h  g e k e n n z e i c h n e t, daß vor dem Spritzen des Radscheibenkörpers (2) zur Verringerung der Spritzkunststoff-Wandstärke und -Erstarrungsdauer Füllkörper (11),-kerne o.dgl. in die Spritzgußform eingelegt werden.

4. Nach dem Verfahren gemäß einem der Ansprüche 1 bis 3 hergestelltes Kunststoff-Laufrad mit Gummibereifung, d a d u r c h  g e k e n n - z e i c h n e t, daß der elastische Gummireifen (1) mit Vorspannung auf dem an ihm innenseitig angespritzten Kunststoff-Radscheibenkörper (2) bzw. dessen Felgenbett (3) anliegt.

5. Laufrad nach Anspruch 4, d a d u r c h  g e k e n n z e i c h n e t, daß der an dem elastischen Gummireifen (1) innenseitig angespritzte Radscheibenkörper (2) ein Doppel-T-förmiges Profil besitzt, nämlich aus einem hülsenförmigen Nabenteil (5) und einem damit über einen radial verlaufenden Stegteil (6) verbundenen Felgenteil (7) besteht, das zwei den Gummireifen (1) seitlich außen umgreifende, das Felgenbett (3) zwischen sich einschließende Felgenhörner (3') besitzt.

6. Laufrad nach Anspruch 5, d a d u r c h  g e k e n n z e i c h n e t, daß sein Radscheibenkörper (2) von homogener Spritzkunststoff-Beschaffenheit ist (Fig. 1,2).

7. Laufrad nach Anspruch 6, d a d u r c h   g e k e n n z e i c h n e t , daß an den Außenseiten des radial verlaufenden Stegteiles (6) radial verlaufende Verstärkungsrippen (8) vorhanden sind (Fig.2).

8. Laufrad nach Anspruch 4 oder 5, d a d u r c h   g e k e n n - z e i c h n e t , daß in dem an den Gummireifen (1) innenseitig angespritzten Radscheibenkörper (2) ein ringförmiger Füllkörper (11) eingebettet ist (Fig. 3,4).

9. Laufrad nach Anspruch 8, d a d u r c h   g e k e n n z e i c h n e t , daß der ringförmige Füllkörper (11) in Höhe des radialen Stegteiles (6) vorgesehen ist und sich teilweise bis in den Naben- und/oder Felgenteil (5 bzw. 7) erstreckt (Fig. 3,4).

10. Laufrad nach Anspruch 4 oder 5, d a d u r c h   g e k e n n - z e i c h n e t , daß der Radscheibenkörper (2) aus zwei vorgefertigten schalenförmigen Seitenwandteilen (16') und einem an diese sowie an den Gummireifen (1) angespritzten Zwischenteil (16) besteht (Fig. 5).

11. Laufrad nach Anspruch 4, d a d u r c h   g e k e n n z e i c h n e t , daß der elastische Gummireifen (1) an seinem Innenumfang mit nach innen ragenden, segmentartigen Füllvorsprüngen (1') versehen ist und der daran und dazwischen eingespritzte Radscheibenkörper (2) ein U-förmiges Profil besitzt, dessen Steg die Radnabe (18) und

- 14 -

0007989

seitlich umschließende Radscheiben-Seitenwände (19) bilden, die durch zwischen die Füllvorsprünge (1') greifende Verstärkungsstege (20) zusätzlich miteinander verbunden sind (Fig. 6,7).

12. Laufrad, das nach dem Verfahren des Anspruchs 3 hergestellt ist, dadurch gekennzeichnet, daß es einen einteiligen, aus einem Füllkörper (11) und daran angespritzter Kunststoffmasse (10) bestehenden Radscheibenkörper (2) mit darauf aufgebrachter Bereifung (z.B. 1) besitzt.

13. Laufrad nach Anspruch 12, dadurch gekennzeichnet, daß der aus Spritzkunststoff bestehende Radscheibenkörper (2) ein Doppel-T-förmiges Profil, nämlich ein jeweils hülsenförmiges Nabenteil (5) und Felgenteil (7) sowie dazwischen ein den eingelegten Füllkörper (11) beidseitig umgreifende Radscheiben-Seitenwände bildendes Stegteil (6') besitzt (Fig. 3,4).

Fig.1

Fig.2

0007989

Fig.3

Fig.4

Fig.5

Fig.6

Fig.7

**Europäisches Patentamt**

**EUROPÄISCHER RECHERCHENBERICHT**

0007989
Nummer der Anmeldung

EP 79 102 032.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CH - A - 415 032 (GEORG FISCHER A.G.) <br> * Ansprüche * <br> -- | 1,4, <br> 6 |
| A | DE - A - 1 529 909 (M. ERNST) <br> * Anspruch 1 * <br> -- | 1 |
| A | DE - A - 1 914 962 (SHELLER-GLOBE CORP.) <br> * Anspruch 2 * <br> -- | 2 |
| A | DE - A1 - 2 350 512 (ACOUSA SAXON S.A.) <br> * Anspruch 1 * <br> -- | 1 |
| A | GB - A - 1 284 174 (HAPPE & CO) <br> * Abbildungen 1 bis 4 * <br> ---- | 1 |

**KLASSIFIKATION DER ANMELDUNG (Int.Cl.3)**

B 29 F 1/10
B 60 B 5/02

**RECHERCHIERTE SACHGEBIETE (Int. Cl.3)**

B 29 F 1/10
B 60 B 5/00
B 60 B 33/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 12-11-1979 | GOLDSCHMIDT |

EPA form 1503.1 06.78